(19) Europäisches Patentamt
European Patent Office
Office européen des brevets

(11) EP 2 603 713 B1

(12) **EUROPEAN PATENT SPECIFICATION**

(45) Date of publication and mention of the grant of the patent:
**14.02.2018 Bulletin 2018/07**

(21) Application number: **11748835.3**

(22) Date of filing: **10.08.2011**

(51) Int Cl.:
***F16F 1/373*** *(2006.01)* ***F16F 1/42*** *(2006.01)*

(86) International application number:
**PCT/US2011/047251**

(87) International publication number:
**WO 2012/021619 (16.02.2012 Gazette 2012/07)**

(54) **THERMOPLASTIC JOUNCE BUMPERS**

THERMOPLASTISCHE ANSCHLAGPUFFER

PARE-CHOCS THERMOPLASTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.04.2011 US 201161479467 P**
**12.08.2010 US 372990 P**

(43) Date of publication of application:
**19.06.2013 Bulletin 2013/25**

(73) Proprietor: **E. I. du Pont de Nemours and Company**
**Wilmington, DE 19898 (US)**

(72) Inventors:
- **SZEKELY, Peter, Laszlo**
**F-74370 Pringy (FR)**
- **VAN DER ZYPPE, Damien**
**F-94500 Champigny Sur Marne (FR)**

(74) Representative: **Heinemann, Monica et al**
**Abitz & Partner**
**Patentanwälte mbB**
**Postfach 86 01 09**
**81628 München (DE)**

(56) References cited:
**US-A- 3 118 659** **US-A- 4 235 427**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 603 713 B1

## Description

### Field of Invention

The present invention relates to the field of vehicle suspension systems, and more particularly to jounce bumpers.

### Background of the Invention

A jounce bumper (also called a bump stop, rebound bumper, end-of-travel bumper, strike-out bumper, suspension bumper, or compression bumper) is a shock-absorbing device ordinarily positioned on the top of vehicle suspensions. Jounce bumpers for use in motor vehicle suspension systems have long been used for cushioning the impact between two suspension system components, such as the axle and a portion of the frame, as well as for attenuating noise and vibration to increase the ride comfort of the passengers. Since displacement of the vehicle chassis causes displacements of the strut, the strut undergoes cycles of compression and extension in response to the displacement of the vehicle chassis. Provision must be made for protecting the strut assembly and the vehicle body from the jounce forces associated with severe irregularities in the road surface leading to extreme displacement of the suspension. For this reason, a jounce bumper is attached to the suspension system at a point where impact is likely to occur when the shock absorber fails to absorb the forces created by extraordinary driving conditions. Particularly, during jounce motions of the strut, the damper "bottoms out" and the jounce bumper moves into contact with the jounce bumper plate and compresses to dissipate energy resulting in cushioning the impact, reducing noise, reducing the sensation of impact to the passengers and reducing possible damage to the vehicle suspension system. Jounce bumpers are elongated, generally cylindrical or conical, members with or without convolutes, made of a compressible and elastomeric material that extends around the piston rod. As taught in U.S. Patent No. 4,681,304, convoluted bumpers function by a progressive stacking of the convolutions to provide resistance to jounce forces.

Materials suitable for this application must be resilient, *i.e.* capable of withstanding shock without undue permanent deformation or rupture, and must have excellent flex life. Conventional jounce bumpers are formed of foamed polyurethane and vulcanized rubber. For example, jounce bumpers are often formed of microcellular polyurethane (MCU). A microcellular polyurethane jounce bumper is made by casting polyurethane precursors in a jounce bumper mold. Microcellular foam is obtained from the reaction of diisocyanate glycol with a blowing agent or with water which produces carbon dioxide gas for foaming. This technology is time-consuming since foaming requires prolonged times in the mold due to the slow release of carbon dioxide. While jounce bumpers made of foamed polyurethane have good ride characteristics, they are expensive to produce since they require an energy- and time-consuming technology due to the crosslinking.

With the aim of improving durability, inertness to automotive fluids, and resistance to tear propagation of the material used to form the jounce bumper, U.S. Patent No. 5,192,057 discloses an elongated hollow body formed of an elastomer, preferably from a copolyetherester polymer. As disclosed therein, such pieces, including jounce bumpers having bellows shaped sections with a constant thickness profile, are manufactured by blow molding techniques. An alternative method for forming jounce bumpers, i.e. corrugated extrusion, is described in U.S. Published Patent Application No. 2008/0272529.

In a typical blow molding operation for manufacturing hollow plastic articles a parison of plastic material that has been produced by extrusion or injection molding and which is in a hot moldable condition is positioned between two halves of an open blow mold having a mold cavity of a shape appropriate to the required external shape of the article to be manufactured. The parison gradually moves and stretches under the influence of gravity. When the parison reaches the proper length, the mold halves are closed around it and pressurized air or other compressed gas is introduced in the interior of the parison to inflate it to the shape of mold or to expand it against the sides of the mold cavity. After a cooling period, the mold is opened and the final article is ejected.

In extrusion blow molding, the parison is produced by extruders. Extrusion blow molding is less expensive than foaming/casting but leads to less precise dimensions and leads also to limitations in the wall thickness of the part. The stiffness of a jounce bumper is directly related to its thickness.

Thus, a small variation of thickness (either variation from article to article, along the longitudinal axis of a jounce bumper made from one shot, or along the radius of the convolute of a jounce bumper made in a single jounce bumper), for example 0.2 mm, will significantly change the stiffness of the jounce bumper and its energy absorption capacity and dampening performance.

Injection blow molding gives more precise dimensions than extrusion blow molding. In this technique, the parison is formed by injection molding, the inner core of the mold is removed and the parison is quickly inflated while being enclosed in two mold halves as in extrusion blow molding. The parison can be injection molded to have a non-constant cross-section resulting in a better wall thickness uniformity of the final part than from extrusion blow molding. Injection blow molding allows more precise details in the final blown structure but is more expensive than extrusion blow

molding.

In general, it is desired to maximize the absorption of energy in a jounce bumper. The energy absorption behavior of a jounce bumper can be measured, for example, by measuring deformation versus applied force. Usually deformation is plotted on the X-axis (in mm), and applied load (force) is plotted on the Y-axis (in N). The area under the curve represents the energy absorbed by the jounce bumper according to the formula displacement X Force = energy.

Thermoplastic jounce bumpers made by any of the above-mentioned techniques can exhibit different responses depending on design, including specific configuration details, and materials of manufacture. There remains a need to improve the design of thermoplastic jounce bumpers so as to improve the force-displacement behavior, thereby increasing the energy absorbed.

## Summary of the Invention

In a first aspect, the invention provides a jounce bumper made of copolyetherester, comprising:

a hollow elongated tubular body having a wall, the tubular body having at least two bellows, each bellow being defined by a peak and a trough, the peak having a fillet radius of rs, the trough having a fillet radius of rc; wherein rc is less than rs, and wherein the ratio of Tmax, the maximum thickness of the wall in a peak to Tm, the thickness of the wall at an intermediate point between the peak and the trough, is greater than or equal to 1.05, wherein a peak is defined by a wall arc having end points at the intermediate points where the wall thickness is Tm.

In a second aspect, the invention provides a jounce bumper made of copolyetherester, comprising:

a hollow elongated tubular body having a wall, the tubular body having at least two bellows, each bellow being defined by a peak and a trough, the trough having a fillet radius of rc, the peak having a fillet radius of rs and a wall thickness at the middle of a peak of Ts (Ts being Tmax in the case when Tmax falls substantially in the middle of the peak); wherein rc is less than rs,
and wherein the ratio of Ts (Tmax), the maximum thickness of the wall in a peak to Tm, the thickness of the wall at an intermediate point between the peak and the trough, is greater than or equal to 1.05, wherein a peak is defined by a wall arc having end points at the intermediate points where the wall thickness is Tm.

In a third aspect, the invention provides a method for the manufacture of a jounce bumper, comprising the step of:

shaping copolyetherester material into a hollow elongated tubular body having a wall, the tubular body having at least two bellows, each bellow being defined by a peak and a trough, the trough having a fillet radius of rc, the peak having a fillet radius of rs and a maximum wall thickness of the peak being at a point within the peak and designated Tmax; wherein rs is greater than rc, and wherein the ratio of Tmax, the maximum thickness of the wall in a peak, to Tm, the thickness of the wall at an intermediate point between peak and trough, is greater than or equal to 1.05, and wherein the peak is defined by the wall arc having end points at the intermediate points where the wall thickness is Tm.

In a fourth aspect, the invention provides a method for the manufacture of a jounce bumper, comprising the step of:

shaping copolyetherester material into a hollow elongated tubular body having a wall, the tubular body having at least two bellows, each bellow being defined by a peak and a trough, the trough having a fillet radius of rc, the peak having a fillet radius of rs and a wall thickness at the middle of the peak of Ts (Ts being Tmax in the case when Tmax falls substantially in the middle of the peak); wherein rs is greater than rc, and wherein the ratio of Ts (Tmax), the thickness of the wall at a peak, to Tm, the thickness of the wall at
an intermediate point between peak and trough, is greater than or equal to 1.05.

In a fifth aspect, the invention provides a method for absorbing shocks in an automobile suspension comprising using a jounce bumper to absorb energy from displacement of the suspension, wherein the jounce bumper is made of copolyetherester and comprises a hollow elongated tubular body having a wall, the tubular body having at least two bellows, each bellow being defined by a peak and a trough, the trough having a fillet radius of rc, the peak having a fillet radius of rs and a maximum wall thickness of the peak being at a point within the peak and designated Tmax; wherein rs is greater than rc, and wherein the ratio of Tmax, the maximum thickness of the wall in a peak, to Tm, the thickness of the wall at an intermediate point between peak and trough, is greater than or equal to 1.05, and wherein the peak is defined by the wall arc having end points at the intermediate points where the wall thickness is Tm.

In a sixth aspect, the invention provides a method for absorbing shocks in an automobile suspension comprising using a jounce bumper to absorb energy from displacement of the suspension, wherein the jounce bumper is made of copolyetherester and comprises a hollow elongated tubular body having a wall, the tubular body having at least two bellows, each bellow being defined by a peak and a trough, the trough having a fillet radius of rc, the peak having a fillet radius of rs and a wall thickness in the middle of the peak of Ts (Ts being Tmax in the case when Tmax falls substantially in the middle of the peak); wherein rs is greater than rc, and wherein the ratio of Ts (Tmax), the thickness of the wall at a peak, to Tm, the thickness of the wall at an intermediate point between peak and trough, is greater than or equal to 1.05.

## Brief Description of the Drawings

**Figure 1** is a schematic broken view of an "outward" jounce bumper, wherein Re designates the external radius at a peak, Ri designates the external radius at a trough, and P represents the distance from peak to peak (the pitch).

**Figure 2A** is a schematic cross-section enlarged view of Figure 1, wherein the dashed line represents the longitudinal axis of the jounce bumper, rs designates the fillet radius of an outward convolute, and rc designates the fillet radius on an inward convolute, Ts designates the maximum wall thickness in the peak of an outward convolute (i.e. for a case where Tmax occurs substantially in the middle of the peak), Tc designates the wall thickness at the trough (inward convolute), and Tm designates the intermediate wall thickness at the point of tangency between a circle having radius rc and a circle having radius rs. A peak is defined by the wall arc having endpoints Tm.

**Figure 2B** is a schematic cross-section enlarged view of a jounce bumper showing a case when circles of radius rs and rc are not tangent. The dashed line represents the longitudinal axis of the jounce bumper, rs designates the fillet radius of an outward convolute, and rc designates the fillet radius on an inward convolute, Ts designates the maximum wall thickness in the peak of an outward convolute (i.e. for a case where Tmax occurs at the middle of a peak), Tc designates the wall thickness at the trough (inward convolute), and Tm designates the intermediate wall thickness at the midpoint of a line drawn tangent to both a circle having radius rc and a circle having radius rs.

**Figure 3** shows a partially cut-away view of an example of one example of a jounce bumper as installed in the suspension of an automobile.

**Figure 4** illustrates percent deformation (deflection) (%) on the X-axis vs. applied force (N) on the Y-axis for a jounce bumper according to the invention, E1, and a comparative jounce bumper, C1. The percent deformation is defined as the ratio of actual deformation in mm to the initial height in mm of the jounce bumper prior to its first compression. The curve for E1 is designated with triangles, and the curve for C1 is designated with circles.

## Detailed Description of the Invention

Note: in the drawings the wall thickness of the jounce bumper is drawn as being essentially constant, whereas in the jounce bumper of the invention it will vary throughout the jounce bumper. In a preferred embodiment, it reaches its maximum thickness in a peak substantially in the middle of the peak.

The inventors have found that in a jounce bumper made from copolyetherester, when the ratio (Tmax/Tm) of maximum thickness of the wall in a peak (Tmax, alternatively designated Ts when Tmax occurs substantially at the middle of a peak) to the thickness of the wall at an intermediate point between peak and trough (Tm) is greater than or equal to 1.05, superior absorption of energy is obtained, as measured, for example, by deformation versus applied force. As used herein the term superior energy absorption means both a high force along the displacement, i.e. at least 55N for 50% relative deformation and at the same time a high level of deformation when the force is very high, i.e. at least 65% relative deformation at 10KN. The level of energy absorption can be estimated by the force level at 50 and/or 60% relative deformation and the relative deformation at 10KN (i.e. 10 kNewtons of applied force).

Ts (Tmax) and Tm are often measured for all convolutes in a jounce bumper and the average values are taken as Ts (Tmax) and Tm, due to small variations from convolute to convolute or small variations at various angular positions on the same convolute. Tmax is the maximum wall thickness in the wall arc defined by endpoints Tm. It may occur anywhere within the peak (i.e. between points Tm). In a preferred embodiment, it is substantially in the middle of the peak (i.e. the midpoint between points Tm), in which case it can be designated Ts.

The invention relates to "outward" jounce bumpers, which are those in which the peak fillet radius, rs, is larger than the trough fillet radius, rc (i.e. rc < rs), as exemplified in Figures 2A and 2B.

The principle of the invention can be better understood by examining Figures 1, 2A and 2B. Figure 1 shows a typical "outward" jounce bumper. It is a hollow tube-shaped article, having outward and inward convolutes. The geometry will be defined by a pitch (P) which is the distance from one peak to the next, the external radius at a peak (Re), and the external radius at a trough (Ri). Both Re and Ri are measured from the longitudinal axis of the jounce bumper (i.e. the imaginary line that passes longitudinally through the centre of the jounce bumper). The outermost point on an outward

convolute is referred to as a peak, and the point of most inward pinching (without taking into account the thickness of the convolutes) is referred to as a trough.

Figure 2A shows an enlargement of a bellows consisting of an outward convolute and an inward convolute. The outward convolute (top) is defined by a radius rs, and the inward convolute (bottom) is defined by a radius rc. An "outward" jounce bumper is any jounce bumper in which rc is less than rs. If circles are drawn having radii rs and rc, the point of tangency of these two circles is a point on the wall of the jounce bumper intermediate between a peak and a trough. The wall of the jounce bumper at this point has thickness Tm. As shown in Figure 2B, in cases in which there is no point of tangency between circles rs and rc, Tm is defined as the middle of the segment of the tangent to rs and rc circles. The wall of the jounce bumper in a peak has maximum thickness Tmax (or Ts when it falls substantially in the middle of a peak). The inventors have found that when the ratio (Ts/Tm) of maximum thickness of the wall in a peak (Tmax or Ts) to the thickness of the wall at an intermediate point between peak and trough (Tm) is greater than or equal to 1.05, a jounce bumper showing superior absorption of energy is obtained.

In preferred embodiments, Tmax/Tm (or Ts/Tm) is greater than 1.1, more preferably greater than 1.2, for example 1.25 or 1.3 or 1.4 and greater.

Jounce bumpers according to the invention maximize the energy absorbed, as measured by displacement (or deformation) versus applied force. In a preferred embodiment, the jounce bumpers also maximize the displacement achieved for a given applied force, and maximize the displacement at maximum force (i.e. when the jounce bumper is fully compressed). The displacement at maximum force (full compression) is often measured at a force of ten kiloNewtons (10 kN) and is referred to as X10KN, for relative deformation X at an applied force of ten kiloNewtons. To maximize energy absorption and maximize X10KN, the inventors have found that it is desirable not only that Tmax/Tm (or Ts/Tm) be greater than or equal to 1.05, but also that the ratio of the maximum wall thickness at a peak, Tmax (or Ts when it occurs at the middle of a peak), to the wall thickness at the intermediate point, Tm, be greater than or equal to a certain value [$(Tmax/Tm)_1$], which certain value is dependant on the maximum wall thickness in a peak, Tmax or Ts, and the external radius at a trough, Ri. This can be expressed by the following combination of features:

$$Tmax/Tm \text{ (or } Ts/Tm) \geq 1.05;$$

and

$$(Tmax/Tm) > (Tmax/Tm)_1 \text{ wherein } (Tmax/Tm)_1 = 1.3 + 0.005 \text{ X } Ri - 0.055 \text{ X } Tmax$$

Where:

Tmax is the maximum wall thickness in a peak;
Tm is the wall thickness at the point of tangency between a circle of radius rc and a circle of radius rs, or in cases in which rs and rc are not tangent, Tm is the wall thickness at the midpoint of a line drawn tangent to circles rs and rc; and
Ri is the external radius at a trough.

The pitch, P, may be constant, meaning that the distance from peak to peak (or trough to trough) is always the same, or it may be non-constant. Preferably it is constant.

For use with automobiles, a typical pitch, P, is between at or about 10 and 30 mm, more preferably between at or about 13 and 23 mm, the thicknesses Tmax, Ts and Tm are typically chosen between at or about 2 and 5 mm, more preferably between at or about 2 and 4 mm, and Ri is typically at or about 10 to 40 mm, more preferably at or about 15 to 25 mm.

The number of convolutes and the overall height of the jounce bumper can be chosen depending on the size and weight of the vehicle.

The jounce bumper of the invention is made of copolyetherester. Preferably, copolyetherester is used that has a relatively high melt viscosity (i.e. a melt flow rate between 0.5 and 8 g/10min, more preferably between 1 and 8 g/10 min, more preferably between 2 and 6 g/10 min, particularly preferably between 3 and 5 g/10 min at 230°C under 5kg load according to ISO1133). Preferably the copolyetherester has a hardness between at or about 45 and 60D, more preferably at or about 47 to 55D (at 1s according to ISO868). Particularly preferably the copolyetherester is a segmented copolyetherester having soft segments of polytetramethylene ether glycol (PTMEG).

Examples of copolyetheresters useful for the jounce bumper of the present invention include those defined in ISO 18064:2003(E).

Thermoplastic polyolefinic elastomers (TPO's) consist of thermoplastic olefinic polymers, for example polypropylene or polyethylene, blended with a thermoset elastomer. A typical TPO is a melt blend or reactor blend of a polyolefin plastic, generally a polypropylene polymer, with an olefin copolymer elastomer, typically an ethylene-propylene rubber (EPR) or an ethylene-propylene-diene rubber (EPDM). Common olefin copolymer elastomers include EPR, EPDM, and ethylene copolymers such as ethylene-butene, ethylene-hexane, and ethylene-octene copolymer elastomers (for example Engage® polyolefin elastomer, which is commercially available from The Dow Chemical Co.) and ethylene-butadiene rubber.

Styrenic thermoplastic elastomers (TPS's) consist of block copolymers of polystyrene and rubbery polymeric materials, for example polybutadiene, a mixture of hydrogenated polybutadiene and polybutadiene, poly(ethylene-propylene) and hydrogenated polyisoprene. Specific block copolymers of the styrene/conjugated diene/styrene type are SBS, SIS SIBS, SEBS and SEPS block copolymers. These block copolymers are known in the art and are commercially available.

Thermoplastic polyurethanes (TPU's) consist of linear segmented block copolymers composed of hard comprising a diisocyanate, a short chain glycol and soft segments comprising diisocyanate and a long chain polyol as represented by the general formula

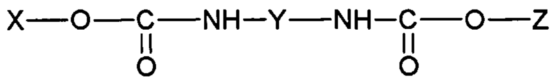

wherein
"X" represents a hard segment comprising a diisocyanate and a short-chain glycol, "Z" represents a soft segment comprising a diisocyanate and a long-chain polyol and "Y" represents the residual group of the diisocyanate compound of the urethane bond linking the X and Z segments. The long-chain polyol includes those of a polyether type such as poly(alkylene oxide)glycol or those of polyester type.

Thermoplastic vulcanizates (TPV's) consist of a continuous thermoplastic phase with a phase of vulcanized elastomer dispersed therein. Vulcanizate and the phrase "vulcanizate rubber" as used herein are intended to be generic to the cured or partially cured, crosslinked or crosslinkable rubber as well as curable precursors of crosslinked rubber and as such include elastomers, gum rubbers and so-called soft vulcanizates. TPV's combine many desirable characteristics of crosslinked rubbers with some characteristics, such as processability, of thermoplastic elastomers. There are several commercially available TPVs, for example Santoprene® and Sarlink® (TPV's based on ethylene-propylene-diene copolymer and polypropylene) which are respectively commercially available from Advanced Elastomer Systems and DSM; Nextrile™ (TPV based on nitrile rubber and polypropylene) which is commercially available from Thermoplastic Rubber Systems; Zeotherm® (TPV based on acrylate elastomer and polyamide) which is commercially available from Zeon Chemicals; and DuPont™ ETPV from E. I. du Pont de Nemours and Company, which is described in International Patent Application Publication WO 2004/029155 (thermoplastic blends comprising from 15 to 60 wt. % of polyalkylene phthalate polyester polymer or copolymer and from 40 to 85 wt. % of a crosslinkable poly(meth)acrylate or polyethylene/(meth)acrylate rubber dispersed phase, wherein the rubber has been dynamically crosslinked with a peroxide free radical initiator and an organic diene co-agent).

Thermoplastic polyamide block copolymers (TPA's) consist of linear and regular chains of polyamide segments and flexible polyether or polyester segments or soft segments with both ether and ester linkages as represented by the general formula

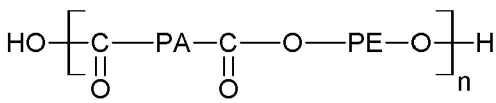

wherein
"PA" represents a linear saturated aliphatic polyamide sequence and "PE" represents for example a polyoxyalkylene sequence formed from linear or branched aliphatic polyoxyalkylene glycols or a long-chain polyol with either ether linkages or ester linkages or both linkages and mixtures thereof or copolyethers copolyesters derived therefrom. The softness of the copolyetheramide or the copolyesteramide block copolymer generally decreases as the relative amount of polyamide units is increased.

Examples of thermoplastic polyamide block copolymers are commercially available from Arkema or Elf Atochem under the trademark Pebax®.

For an excellent balance of grease resistance, high temperature durability and low temperature flexibility, the jounce bumper according to the present invention is made from copolyetherester compositions. Thermoplastic polyesters are typically derived from one or more dicarboxylic acids (where herein the term "dicarboxylic acid" also refers to dicarboxylic acid derivatives such as esters) and one or more diols. In polyesters the dicarboxylic acids may comprise one or more of terephthalic acid, isophthalic acid, and 2,6-naphthalene dicarboxylic acid, and the diol component comprises one or more of $HO(CH_2)_nOH$ (I); 1,4-cyclohexanedimethanol; $HO(CH_2CH_2O)_mCH_2CH_2OH$ (II); and $HO(CH_2CH_2CH_2CH_2O)_zCH_2CH_2CH_2CH_2OH$ (III), wherein n is an integer of 2 to 10, m on average is 1 to 4, and z is on average about 7 to about 40. Note that (II) and (III) may be a mixture of compounds in which m and z, respectively, may vary and that since m and z are averages, they need not be integers. Other dicarboxylic acids that may be used to form the thermoplastic polyester include sebacic and adipic acids. Hydroxycarboxylic acids such as hydroxybenzoic acid may be used as comonomers. Specific polyesters include poly(ethylene terephthalate) (PET), poly(trimethylene terephthalate) (PTT), poly(1,4-butylene terephthalate) (PBT), poly(ethylene 2,6-naphthoate), and poly(1,4-cyclohexyldimethylene terephthalate) (PCT).

Copolyester thermoplastic elastomers (TPC) such as copolyetheresters or copolyesteresters are copolymers that have a multiplicity of recurring long-chain ester units and short-chain ester units joined head-to-tail through ester linkages, said long-chain ester units being represented by formula (A):

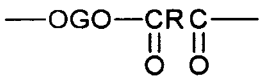

(A)

and said short-chain ester units being represented by formula (B):

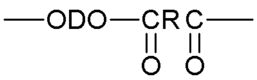

(B)

wherein

G is a divalent radical remaining after the removal of terminal hydroxyl groups from poly(alkylene oxide)glycols having preferably a number average molecular weight of between about 400 and about 6000; R is a divalent radical remaining after removal of carboxyl groups from a dicarboxylic acid having a molecular weight of less than about 300; and D is a divalent radical remaining after removal of hydroxyl groups from a diol having a molecular weight preferably less than about 250; and wherein said copolyetherester(s) preferably contain from about 15 to about 99 wt. % short-chain ester units and about 1 to about 85 wt. % long-chain ester units.

As used herein, the term "long-chain ester units" as applied to units in a polymer chain refers to the reaction product of a long-chain glycol with a dicarboxylic acid. Suitable long-chain glycols are poly(alkylene oxide) glycols having terminal (or as nearly terminal as possible) hydroxy groups and having a number average molecular weight of from about 400 to about 6000, and preferably from about 600 to about 3000. Preferred poly(alkylene oxide) glycols include poly(tetramethylene oxide) glycol, poly(trimethylene oxide) glycol, poly(propylene oxide) glycol, poly(ethylene oxide) glycol, copolymer glycols of these alkylene oxides, and block copolymers such as ethylene oxide-capped poly(propylene oxide) glycol. Mixtures of two or more of these glycols can be used.

The term "short-chain ester units" as applied to units in a polymer chain of the copolyetheresters refers to low molecular weight compounds or polymer chain units. They are made by reacting a low molecular weight diol or a mixture of diols with a dicarboxylic acid to form ester units represented by Formula (B) above. Included among the low molecular weight diols which react to form short-chain ester units suitable for use for preparing copolyetheresters are acyclic, alicyclic and aromatic dihydroxy compounds. Preferred compounds are diols with about 2-15 carbon atoms such as ethylene, propylene, isobutylene, tetramethylene, 1,4-pentamethylene, 2,2-dimethyltrimethylene, hexamethylene and decamethylene glycols, dihydroxycyclohexane, cyclohexane dimethanol, resorcinol, hydroquinone, 1,5-dihydroxynaphthalene, and the like. Especially preferred diols are aliphatic diols containing 2-8 carbon atoms, and a more preferred diol is 1,4-butanediol.

Copolyetheresters that have been advantageously used for the manufacture of the jounce bumper of the present invention are commercially available from E. I. du Pont de Nemours and Company, Wilmington, Delaware under the trademark Hytrel® copolyetherester elastomer.

Jounce bumpers according to the present invention are made of copolyetheresters. More preferably a copolyether ester is used that is made from an ester of terephthalic acid, e.g. dimethylterephthalate, 1-4 butanediol and a poly(tetramethylene ether) glycol. The weight percentage of short-chain ester units is about 50 where the remainder is long-chain ester units. The copolyetherester elastomer has a high melt viscosity with a melt flow rate of about 4g/10mn

at 230°C under 5kg load as measured according to ISO1133. Its hardness is about 47 shore D at 1s as measured according to ISO868.

The material used to manufacture the jounce bumpers according to the present invention may comprise additives including plasticizers; stabilizers; antioxidants; ultraviolet absorbers; hydrolytic stabilizers; anti-static agents; dyes or pigments; fillers, fire retardants; lubricants; reinforcing agents such as fibers, flakes or particles of glass; minerals, ceramics, carbon among others, including nano-scale particles; processing aids, for example release agents; and/or mixtures thereof. Suitable levels of these additives and methods of incorporating these additives into polymer compositions are known to those of skill in the art.

The jounce bumper of the invention may be made by any shaping operation or method suitable for shaping copolyetherester material. Examples of such shaping operations or methods comprise operations that include: injection molding, extrusion (e.g. corrugated extrusion), and blow molding (including extrusion blow molding and injection blow molding). Blow molding is particularly preferred as it allows good control over the final
geometry of the part and a good balance between the control of the final geometry and the cost of the process.

Some dimensions of two examples of jounce bumpers according to the invention are listed below in Table 1:

**Table 1. Dimensions of Two Examples of Jounce Bumpers According to the Invention**

| | Unit | Example A | Example B |
|---|---|---|---|
| Tmax (average for all peaks) | mm | 3.7 | 3.4 |
| Tm (average for all convolutes) | mm | 2.6 | 2.8 |
| Ratio Tmax/Tm | -- | 1.42 | 1.21 |
| Pitch (P) | mm | 22.6 | 23.3 |
| Ri (external radius at trough) | mm | 13.4 | 14 |
| $(Tmax/Tm)_1$ (calculated) | | 1.24 | 1.24 |

In use, the jounce bumper is installed on a suspension rod of a vehicle between the vehicle chassis and a shock absorber. An example of installation is shown schematically in Figure 3. Referring to Figure 3, the jounce bumper (1) is installed over the shock absorber rod (2), such that displacement of the shock absorber (3) in the upward direction results in axial compression of the jounce bumper between the shock absorber (3) and the chassis (4). If desired, the jounce bumper (1) can be held in position by a suspension support (5). The numeral (6) identifies the end of the shock absorber connected to the wheel axle.

## Examples

A jounce bumper according to the invention, E1, was prepared by blow molding copolyetherester elastomer made from an ester of terephthalic acid, e.g. dimethylterephthalate, 1-4 butanediol and a poly(tetramethylene ether) glycol. Jounce bumper E1 has Tmax substantially in the middle of the peaks. The weight percentage of short-chain ester units was about 50 and the remainder of the ester units were long-chain ester units. The copolyetherester elastomer had a melt flow rate of about 4g/10 minutes at 230°C under 5kg load according to ISO1133. Its hardness was about 47 shore D at 1s according to ISO868. A comparative jounce bumper C1 was also prepared from this material.

The dimensions of the jounce bumpers are listed in Table 2. The jounce bumper according to the invention, E1, has Tmax/Tm = 1.35, i.e. Tmax/Tm > 1.05, whereas the jounce bumper of comparative example C1, had Tmax/Tm = 1.03 (i.e. less than 1.05).

Additionally, jounce bumper E1 meets the requirements:

$Tmax/Tm \geq 1.05$; and

(Tmax/Tm), the ratio of maximum wall thickness in a peak to the thickness of the wall at an intermediate point between the peak and the trough, is greater than $(Tmax/Tm)_1$, wherein

$$(Tmax/Tm)_1 = 1.3 + 0.005 \times Ri - 0.055 \times Tmax$$

where:

Tmax is the maximum wall thickness in a peak;

Tm is the wall thickness at the point of tangency between a circle of radius rc and a circle of radius rs, or in cases in which rs and rc are not tangent, Tm is the wall thickness at the midpoint of a line drawn tangent to circles rs and rc; and

Ri is the external radius at a trough, and wherein the peak is defined by a wall arc having endpoints Tm.

| Table 2. Dimensions of jounce bumper according to the invention and a comparative jounce bumper | | | |
|---|---|---|---|
| Jounce bumper | | C1 | E1 |
| Initial Height | (mm) | 72.5 | 72.5 |
| Pitch* (P) | (mm) | 25.3 | 25.3 |
| External radiums* at peak (RE) | (mm) | 26.0 | 26.0 |
| Internal radiums* at trough (RI) | (mm) | 13.6 | 13.6 |
| Tmax* (average for all peaks) | (mm) | 3.3 | 3.5 |
| Tm* (average for all convolutes) | (mm) | 3.2 | 2.6 |
| Ratio Tmax/Tm | | 1.03 | 1.35 |

Compression response was measured using two isolated bellows. The molded parts were cut in this fashion to avoid artifacts from the ends of the jounce bumper. The zero mm reference point was an external point located on the plate of the compression machine.

The molded parts were conditioned by applying 3 compression cycles from 0 to 10KN at 50mm/min at 23°C. The parts were then released and maintained for one hour at a temperature of 23°C without stress. The molded parts were then exposed to a fourth compression cycle using the same conditions as the first three cycles. This last cycle defined the static compression curve of the jounce bumpers.

Table 3 lists force required to give relative deformation, actual deflection, and relative deformation at the application of 10KN force (X10KN). The relative deflection data of Table 3 is plotted in Figure 4.

| Table 3. relative deflection (%) and actual deflection (mm) of a jounce bumper according to the invention and a comparative jounce bumper | | | |
|---|---|---|---|
| Relative deflection (%) | Actual deflection (mm) | Force (N) | |
| | | C1 | E1 |
| 0 | 0 | 0 | 0 |
| 15 | 10.9 | 214 | 194 |
| 30 | 21.8 | 411 | 454 |
| 40 | 29.0 | 550 | 572 |
| 50 | 36.3 | 814 | 802 |
| 55 | 39.9 | 961 | 1027 |
| 60 | 43.5 | 1139 | 1326 |
| 65 | 47.1 | 1373 | 1678 |
| 70 | 50.8 | 2508 | 2744 |
| 71 | 51.5 | 2920 | 3479 |
| 72 | 52.2 | 3738 | 4497 |
| 73 | 52.9 | 5136 | 5768 |
| 74 | 53.7 | 7609 | 7394 |
| 75 | 54.4 | 9900 | 9638 |
| Actual deflection at 10KN, X10KN (mm) | | 54.3 | 54.5 |

The data in Table 3 and Figure 4 show that above 55% relative deflection, the force required to cause a given relative deformation (deflection) of the jounce bumper according to the invention, i.e. E1, which has Tmax/Tm of 1.35 (i.e. greater than 1.05), is substantially higher than the force required to cause the same relative deformation in the

comparative jounce bumper C1, which has Tmax/Tm of 1.03 (i.e. less than 1.05). This indicates that the jounce bumper according to the invention, E1, is significantly more effective with respect to absorbing energy than the comparative jounce bumper C1.

Results for the comparative jounce bumper C1 and inventive jounce bumper E1 are shown graphically in Figure 4, in which percent deflection (%) is plotted on the X-axis and applied force (N) is plotted on the Y-axis. The percent deformation is defined as the ratio of actual deformation in mm to the initial height in mm of the jounce bumper prior to its first compression. The results for jounce bumper E1 are shown by the curve designated with triangles. The results for comparative jounce bumper C1 are shown by the curve designated with circles.

The area under the curve (Force X % Deflection) gives a measure of the total energy absorbed. The compression curve for comparative jounce bumper C1 (diamonds) is the lower curve above 55% relative deflection. The jounce bumpers according to the invention E1 (triangles) gives a higher curve above 55% relative deflection, with greater area under the curve, showing increased absorption of energy.

Additionally, it can be seen from Figure 4 that a jounce bumper according to the invention E1 does not significantly sacrifice maximum displacement. X10KN for experimental jounce bumper E1 is not significantly less than X10KN for comparative jounce bumper C1.

## Claims

**1.** A jounce bumper made of copolyetherester, comprising:

a hollow elongated tubular body having a wall, the tubular body having at least two bellows, each bellow being defined by a peak and a trough, the peak having a fillet radius of rs, the trough having a fillet radius of rc and a maximum wall thickness in the peak of Tmax; wherein rc is less than rs, **characterized in that** the ratio of Tmax, the maximum thickness of the wall in a peak, to Tm, the thickness of the wall at intermediate point between the peak and the trough, is greater than or equal to 1.05, and wherein the peak is defined by a wall arc having endpoints at the intermediate points where the wall thickness is Tm.

**2.** A jounce bumper according to claim 1, wherein (Tmax/Tm), the ratio of maximum wall thickness in a peak to the thickness of the wall at an intermediate point between the peak and the trough, is greater than $(Tmax/Tm)_1$, wherein

$$(Tmax/Tm)_1 = 1.3 + 0.005 \times Ri - 0.055 \times Tmax$$

where:

Tmax is the maximum wall thickness in a peak;
Tm is the wall thickness at the intermediate point wherein the intermediate point is the point of tangency between a circle of radius rc and a circle of radius rs, or in cases in which rs and rc are not tangent, Tm is the wall thickness at the intermediate point wherein the intermediate point is the midpoint of a line drawn tangent to circles rs and rc; and
Ri is the external radius at a trough, and wherein the peak is defined by a wall arc having endpoints at the intermediate points where the wall thickness is Tm.

**3.** A jounce bumper according to claim 1 wherein the copolyetherester has a melt viscosity between 0.5 and 8 g/10 min, at 230°C under 5kg load measured according to ISO1133, and a hardness between at or about 45 and 60D measured at 1 s according to ISO868.

**4.** A jounce bumper according to claim 1 wherein the copolyetherester has a melt viscosity between 2 and 6 g/10 min, at 230°C under 5kg load measured according to ISO1133, and a hardness between at or about 45 and 60D measured at 1 s according to ISO868.

**5.** A jounce bumper according to claim 2 wherein the copolyetherester has a melt viscosity between 2 and 6 g/10 min, at 230°C under 5kg load measured according to ISO1133, and a hardness between at or about 45 and 60D measured at 1 s according to ISO868.

**6.** A jounce bumper according to claim 1 wherein the copolyetherester has a melt viscosity between 3 and 5 g/10 min, at 230°C under 5kg load measured according to ISO1133, and a hardness between at or about 45 and 60D measured

at 1 s according to ISO868.

**7.** A jounce bumper according to claim 2 wherein the copolyetherester has a melt viscosity between 3 and 5 g/10 min, at 230°C under 5kg load measured according to ISO1133, and a hardness between at or about 45 and 60D measured at 1 s according to ISO868.

**8.** A jounce bumper according to claim 1 wherein the copolyetheresters are copolymers having a multiplicity of recurring long-chain ester units and short-chain ester units joined head-to-tail through ester linkages, said long-chain ester units being represented by formula (A):

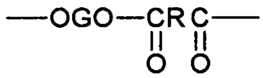

(A)

and said short-chain ester units being represented by formula (B):

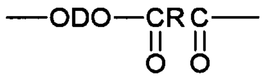

(B)

wherein
G is a divalent radical remaining after the removal of terminal hydroxyl groups from poly(alkylene oxide)glycols having preferably a number average molecular weight of between about 400 and about 6000; R is a divalent radical remaining after removal of carboxyl groups from a dicarboxylic acid having a molecular weight of less than about 300; and D is a divalent radical remaining after removal of hydroxyl groups from a diol having a molecular weight preferably less than about 250; and wherein said copolyetherester(s) preferably contain from about 15 to about 99 wt-% short-chain ester units and about 1 to about 85 wt-% long- chain ester units.

**9.** A method for the manufacture of a jounce bumper, comprising the step of:

shaping copolyetherester material into a hollow elongated tubular body having a wall,
the tubular body having at least two bellows, each bellow being defined by a peak and a trough, the peak having a fillet radius of rs, the trough having a fillet radius of rc;
wherein rc is less than rs, **characterized in that** the ratio of Tmax, the maximum thickness of the wall in a peak, to Tm, the thickness of the wall at an intermediate point between the peak and the trough, is greater than or equal to 1.05, and wherein the peak is defined by a wall arc having endpoints at the intermediate points where the wall thickness is Tm.

**10.** A method of claim 9, wherein the method of shaping comprises a shaping operation selected from the group consisting of injection molding, extrusion, and blow molding.

**11.** A method for absorbing shocks in an automobile suspension comprising using a jounce bumper to absorb energy from displacement of the suspension, wherein the jounce bumper is made of copolyetherester and comprises a hollow elongated tubular body having a wall, the tubular body having at least two bellows, each bellow being defined by a peak and a trough, the peak having a fillet radius of rs, the trough having a fillet radius of rc; wherein rc is less than rs, **characterized in that** the ratio of Tmax, the maximum thickness of the wall in a peak to Tm, the thickness of the wall at an intermediate point between the peak and the trough, is greater than or equal to 1.05, and wherein the peak is defined by a wall arc having endpoints at the intermediate points where the wall thickness is Tm.

**12.** A jounce bumper according to claim 1 wherein the point of maximum wall thickness Tmax falls substantially in the middle of the peak.

**13.** A method according to claim 9 wherein the point of maximum wall thickness Tmax falls substantially in the middle of the peak.

**14.** An automobile suspension comprising the jounce bumper of any of claims 1 through 8 or the jounce bumper of claim 12 installed on the suspension rod of the automobile.

## Patentansprüche

**1.** Aus Copolyetherester hergestellter Anschlagpuffer, der Folgendes umfasst:

einen hohlen, länglichen, röhrenförmigen Körper, der eine Wand aufweist, wobei der röhrenförmige Körper mindestens zwei Faltenbälge besitzt und jeder Faltenbalg durch eine Kuppe und eine Mulde definiert ist, wobei die Kuppe einen Innenradius rs und die Mulde einen Innenradius rc und eine maximale Wandstärke an der Kuppe, Tmax, hat; wobei rc kleiner als rs ist, **dadurch gekennzeichnet, dass** der Quotient von Tmax, der maximalen Wandstärke an einer Kuppe, und Tm, der Wandstärke an einem Zwischenpunkt zwischen der Kuppe und der Mulde, größer oder gleich 1,05 ist, wobei die Kuppe von einem Wandbogen gebildet wird, dessen Endpunkte an den Zwischenpunkten liegen, wo die Wandstärke Tm beträgt.

**2.** Anschlagpuffer nach Anspruch 1, wobei (Tmax/Tm), der Quotient der maximalen Wandstärke an der Kuppe und der Wandstärke an einem Zwischenpunkt zwischen der Kuppe und der Mulde, größer als $(Tmax/Tm)_1$ ist, wobei

$$(\mathrm{Tmax/Tm})_1 = 1{,}3 + 0{,}005 \times \mathrm{Ri} - 0{,}055 \times \mathrm{Tmax};$$

wo

Tmax die maximale Wandstärke an einer Kuppe ist;
Tm die Wandstärke an einem Zwischenpunkt ist, wobei der Zwischenpunkt ein Tangentenpunkt zwischen einem Kreis des Radius rc und einem Kreis des Radius rs ist, oder, falls rs und rc nicht tangential zueinander liegen, ist Tm die Wandstärke an einem Zwischenpunkt, wobei der Zwischenpunkt der Mittelpunkt einer Linie ist, die eine Tangente der Kreise rs und rc bildet, und
Ri der Außenradius an einer Mulde ist, wobei die Kuppe von einem Wandbogen gebildet wird, dessen Endpunkte an den Zwischenpunkten liegen, wo die Wandstärke Tm beträgt.

**3.** Anschlagpuffer nach Anspruch 1, wobei der Copolyetherester eine Schmelzviskosität zwischen 0,5 und 8 g/10 min besitzt, gemessen nach ISO1133 bei 230 °C unter 5 kg Last, und eine Härte zwischen etwa 45 und etwa 60 D, gemessen nach IS0868 nach 1 s.

**4.** Anschlagpuffer nach Anspruch 1, wobei der Copolyetherester eine Schmelzviskosität zwischen 2 und 6 g/10 min besitzt, gemessen nach ISO1133 bei 230 °C unter 5 kg Last, und eine Härte zwischen etwa 45 und etwa 60 D, gemessen nach IS0868 nach 1 s.

**5.** Anschlagpuffer nach Anspruch 2, wobei der Copolyetherester eine Schmelzviskosität zwischen 2 und 6 g/10 min besitzt, gemessen nach ISO1133 bei 230 °C unter 5 kg Last, und eine Härte zwischen etwa 45 und etwa 60 D, gemessen nach ISO868 nach 1 s.

**6.** Anschlagpuffer nach Anspruch 1, wobei der Copolyetherester eine Schmelzviskosität zwischen 3 und 5 g/10 min besitzt, gemessen nach ISO1133 bei 230 °C unter 5 kg Last, und eine Härte zwischen etwa 45 und etwa 60 D, gemessen nach IS0868 nach 1 s.

**7.** Anschlagpuffer nach Anspruch 2, wobei der Copolyetherester eine Schmelzviskosität zwischen 3 und 5 g/10 min besitzt, gemessen nach ISO1133 bei 230 °C unter 5 kg Last, und eine Härte zwischen etwa 45 und etwa 60 D, gemessen nach IS0868 nach 1 s.

**8.** Anschlagpuffer nach Anspruch 1, wobei die Copolyetherester Copolymere mit einer Vielfalt sich wiederholender langkettiger Estereinheiten und kurzkettiger Estereinheiten sind, die durch Esterverbindungen an den jeweils entgegengesetzten Seiten miteinander verbunden sind, wobei die besagten langkettigen Estereinheiten durch die Formel (A) gegeben sind

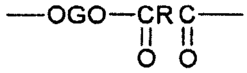

(A)

und die besagten langkettigen Estereinheiten durch die Formel (B) gegeben sind

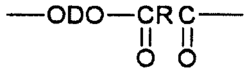

(B)

wobei
G ein divalentes Radikal ist, das nach dem Entfernen von End-Hydroxylgruppen aus Poly(Alkylenoxid)glycolen verbleibt, die vorzugsweise ein ungefähres mittleres Molekulargewicht von etwa 400 bis etwa 6000 besitzen, wobei R ein divalentes Radikal ist, das nach dem Entfernen von Carboxylgruppen aus einer Dicarboxylsäure verbleibt, deren Molekulargewicht kleiner ist als etwa 300, und wobei D ein divalentes Radikal ist, das nach dem Entfernen von Hydroxylgruppen aus einem Diol verbleibt, dessen Molekulargewicht vorzugsweise kleiner ist als etwa 250, wobei der/die genannte(n) Copolyetherester vorzugsweise etwa 15 bis etwa 99 Gewichtsprozent kurzkettige Estereinheiten und etwa 1 bis etwa 85 Gewichtsprozent langkettige Estereinheiten enthält/enthalten.

**9.** Verfahren zur Herstellung eines Anschlagpuffers mit folgendem Schritt:

Formen eines Copolyetherester-Materials zu einem hohlen, länglichen, röhrenförmigen Körper, der eine Wand aufweist, wobei der röhrenförmige Körper mindestens zwei Faltenbälge besitzt und jeder Faltenbalg durch eine Kuppe und eine Mulde definiert ist, wobei die Kuppe einen Innenradius rs und die Mulde einen Innenradius rc hat und rc kleiner als rs ist, **dadurch gekennzeichnet, dass** der Quotient von Tmax, der maximalen Wandstärke an einer Kuppe, und Tm, der Wandstärke an einem Zwischenpunkt zwischen Kuppe und Mulde, größer oder gleich 1,05 ist, wobei die Kuppe von einem Wandbogen gebildet wird, dessen Endpunkte an den Zwischenpunkten liegen, wo die Wandstärke Tm beträgt.

**10.** Verfahren nach Anspruch 9, wobei das Verfahren zur Formung eine Formungsoperation beinhaltet, die aus der Gruppe ausgewählt ist, bestehend aus Spritzguss, Extrusion und Formblasen.

**11.** Verfahren zur Stoßdämpfung in einer Automobil-Aufhängung, umfassend einen Anschlagpuffer, der die Energie aus den Auslenkungen der Dämpfung absorbiert, wobei der Anschlagpuffer aus Copolyetherester hergestellt ist und einen hohlen, länglichen, röhrenförmigen Körper umfasst, der eine Wand aufweist, wobei der röhrenförmige Körper mindestens zwei Faltenbälge besitzt und jeder Faltenbalg durch eine Kuppe und eine Mulde definiert ist, wobei die Kuppe einen Innenradius rs und die Mulde einen Innenradius rc hat und rc kleiner als rs ist, **dadurch gekennzeichnet, dass** der Quotient von Tmax, der maximalen Wandstärke an einer Kuppe, und Tm, der Wandstärke an einem Zwischenpunkt zwischen Kuppe und Mulde, größer oder gleich 1,05 ist, wobei die Kuppe von einem Wandbogen gebildet wird, dessen Endpunkte an den Zwischenpunkten liegen, wo die Wandstärke Tm beträgt.

**12.** Anschlagpuffer nach Anspruch 1, wobei der Punkt Tmax der maximalen Wandstärke im Wesentlichen in der Mitte der Kuppe liegt.

**13.** Verfahren nach Anspruch 9, wobei der Punkt Tmax der maximalen Wandstärke im Wesentlichen in der Mitte der Kuppe liegt.

**14.** Automobil-Aufhängung mit dem Anschlagpuffer nach einem der Ansprüche 1 bis 8 oder mit dem Anschlagpuffer nach Anspruch 12, der an der Aufhängungsstange des Automobils installiert ist.

## Revendications

**1.** Butée de suspension composée de copolyétherester, comprenant:

un corps tubulaire allongé creux possédant une paroi, le corps tubulaire présentant au moins deux soufflets,

chaque soufflet étant défini par une crête et un creux, la crête ayant un rayon du congé rs, le creux ayant un rayon de congé rc et une épaisseur de paroi maximum dans la crête Tmax; dans lequel rc est inférieur à rs, **caractérisé en ce que** le rapport de Tmax, l'épaisseur maximum de la paroi dans une crête, sur Tm, l'épaisseur de la paroi à un point intermédiaire entre la crête et le creux, est supérieur ou égal à 1,05 et dans lequel la crête est définie par un arc de paroi avec des points d'extrémité aux points intermédiaires où l'épaisseur de paroi est Tm.

**2.** Butée de suspension selon la revendication 1, dans laquelle (Tmax/Tm), le rapport d'épaisseur de paroi maximum dans une crête sur l'épaisseur de la paroi à un point intermédiaire entre la crête et le creux, est supérieur à $(Tmax/Tm)_1$, dans laquelle:

$$(Tmax/Tm)_1 = 1,3 + 0,005 \times Ri - 0,055 \times Tmax$$

où :

Tmax est l'épaisseur de paroi maximum dans une crête ;
Tm est l'épaisseur de paroi au point intermédiaire où le point intermédiaire est le point de tangence entre un cercle de rayon rc et un cercle de rayon rs ou dans des cas dans lesquels rs et rc ne sont pas tangents, Tm est l'épaisseur de paroi au point intermédiaire où le point intermédiaire est le point du milieu d'une ligne tracée tangente aux cercles rs et rc; et
Ri est le rayon externe au niveau d'un creux et où la crête est définie par un arc de paroi avec des points d'extrémité aux points intermédiaires où l'épaisseur de paroi est Tm.

**3.** Butée de suspension selon la revendication 1, dans lequel le copolyétherester possède une viscosité à l'état fondu entre 0,5 et 8 g/10 min, à 230°C sous une charge de 5 kg mesurée selon ISO1133 et une dureté entre ou d'environ 45 et 60D mesurée à 1 s selon IS0868.

**4.** Butée de suspension selon la revendication 1, dans lequel le copolyétherester possède une viscosité à l'état fondu entre 2 et 6 g/10 min, à 230°C sous une charge de 5 kg mesurée selon ISO1133 et une dureté entre ou d'environ 45 et 60D mesurée à 1 s selon IS0868.

**5.** Butée de suspension selon la revendication 2, dans lequel le copolyétherester possède une viscosité à l'état fondu entre 2 et 6 g/10 min, à 230°C sous une charge de 5 kg mesurée selon ISO1133 et une dureté entre ou d'environ 45 et 60D mesurée à 1 s selon ISO868.

**6.** Butée de suspension selon la revendication 1, dans lequel le copolyétherester possède une viscosité à l'état fondu entre 3 et 5 g/10 min, à 230°C sous une charge de 5 kg mesurée selon ISO1133 et une dureté entre ou d'environ 45 et 60D mesurée à 1 s selon IS0868.

**7.** Butée de suspension selon la revendication 2, dans lequel le copolyétherester possède une viscosité à l'état fondu entre 3 et 5 g/10 min, à 230°C sous une charge de 5 kg mesurée selon ISO1133 et une dureté entre ou d'environ 45 et 60D mesurée à 1 s selon IS0868.

**8.** Butée de suspension selon la revendication 1, dans laquelle le copolyétherester représentent des copolymères présentant une multiplicité d'unités d'esters à chaînes longues et d'unités d'esters à chaînes courtes récurrentes jointes bout à bout par des liaisons esters, lesdites unités d'esters à chaînes longues étant représentées par la formule (A):

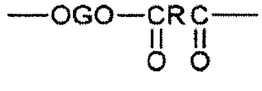

(A)

et lesdites unités d'esters à chaînes courtes étant représentées par la formule (B):

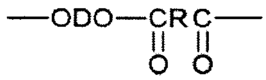

(B)

dans laquelle:

G est un radical divalent restant après le retrait de groupes hydroxyles terminaux à partir de poly(alkylène oxyde)glycols possédant de préférence un poids moléculaire moyen en nombre entre environ 400 et environ 6000; R est un radical divalent restant après le retrait de groupes carboxyles à partir d'un acide dicarboxylique possédant un poids moléculaire inférieur à environ 300; et D est un radical divalent restant après le retrait de groupes hydroxyles à partir d'un diol possédant un poids moléculaire de préférence inférieur à environ 250; et dans lequel le(s)dit(s) copolyétherester(s) contient/contiennent de préférence d'environ 15 à environ 99% en poids d'unités d'ester à chaînes courtes et d'environ 1 à environ 85% en poids d'unités d'esters à chaînes longues.

**9.** Méthode pour la fabrication d'une butée de suspension, comprenant l'étape de:

façonnage d'un matériau de copolyétherester en un corps tubulaire allongé creux possédant une paroi, le corps tubulaire présentant au moins deux soufflets, chaque soufflet étant défini par une crête et un creux, la crête ayant un rayon du congé rs, le creux ayant un rayon de congé rc; dans laquelle rc est inférieur à rs, **caractérisé en ce que** le rapport de Tmax, l'épaisseur maximum de la paroi dans une crête, sur Tm, l'épaisseur de la paroi à un point intermédiaire entre la crête et le creux, est supérieur ou égal à 1,05 et dans laquelle la crête est définie par un arc de paroi avec des points d'extrémité aux points intermédiaires où l'épaisseur de paroi est Tm.

**10.** Méthode selon la revendication 9, où la méthode de façonnage comprend une opération de façonnage choisie dans le groupe constitué de moulage par injection, d'extrusion et de moulage par soufflage.

**11.** Méthode pour l'absorption de chocs dans une suspension automobile comprenant l'utilisation d'une butée de suspension pour absorber l'énergie provenant d'un déplacement de la suspension, dans laquelle la butée de suspension est composé de copolyétherester et comprend un corps tubulaire allongé creux possédant une paroi, le corps tubulaire présentant au moins deux soufflets, chaque soufflet étant défini par une crête et un creux, la crête ayant un rayon de congé rs, le creux ayant un rayon de congé rc; dans lequel rc est inférieur à rs, **caractérisé en ce que** le rapport de Tmax, l'épaisseur maximum de la paroi dans une crête, sur Tm, l'épaisseur de la paroi à un point intermédiaire entre la crête et le creux, est supérieur ou égal à 1,05 et dans laquelle la crête est définie par un arc de paroi avec des points d'extrémité aux points intermédiaires où l'épaisseur de paroi est Tm.

**12.** Butée de suspension selon la revendication 1, dans laquelle le point d'épaisseur de paroi maximum Tmax se trouve essentiellement au milieu de la crête.

**13.** Méthode selon la revendication 9, dans laquelle le point d'épaisseur de paroi maximum Tmax se trouve essentiellement au milieu de la crête.

**14.** Suspension automobile comprenant la butée de suspension selon l'une quelconque des revendications 1 à 8 ou la butée de choc selon la revendication 12 installée sur la tige de suspension de l'automobile.

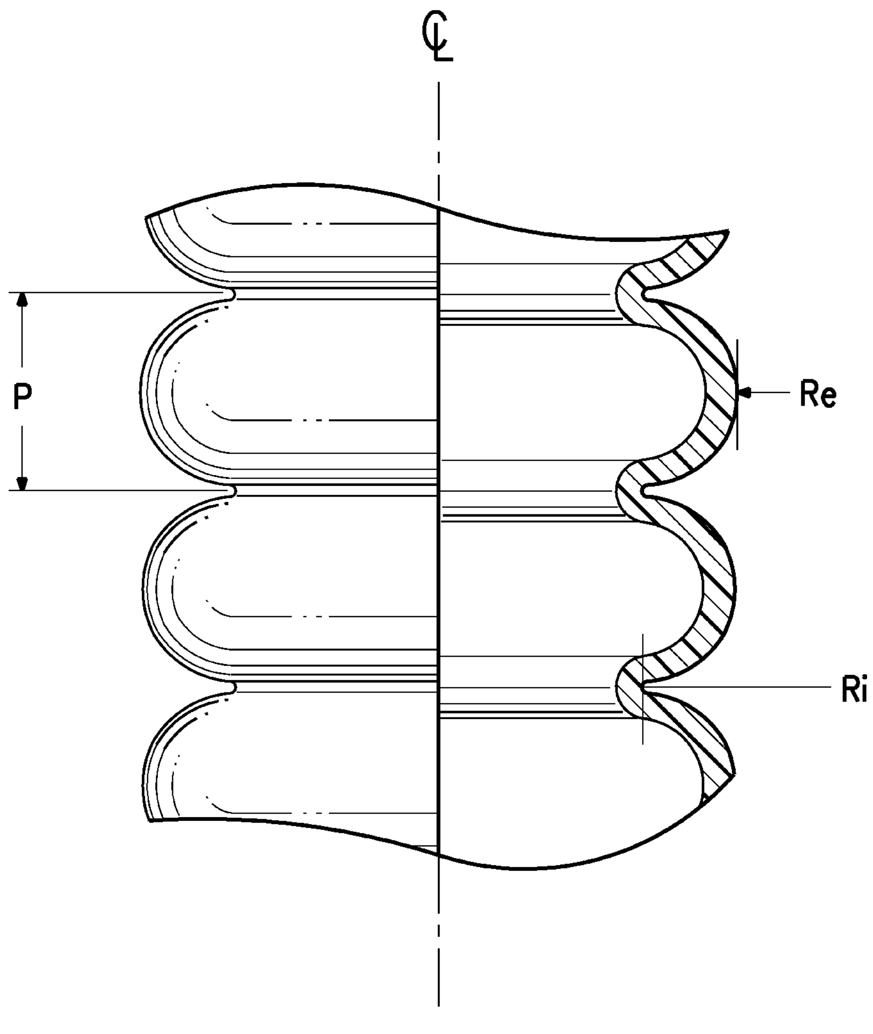


FIG. 1

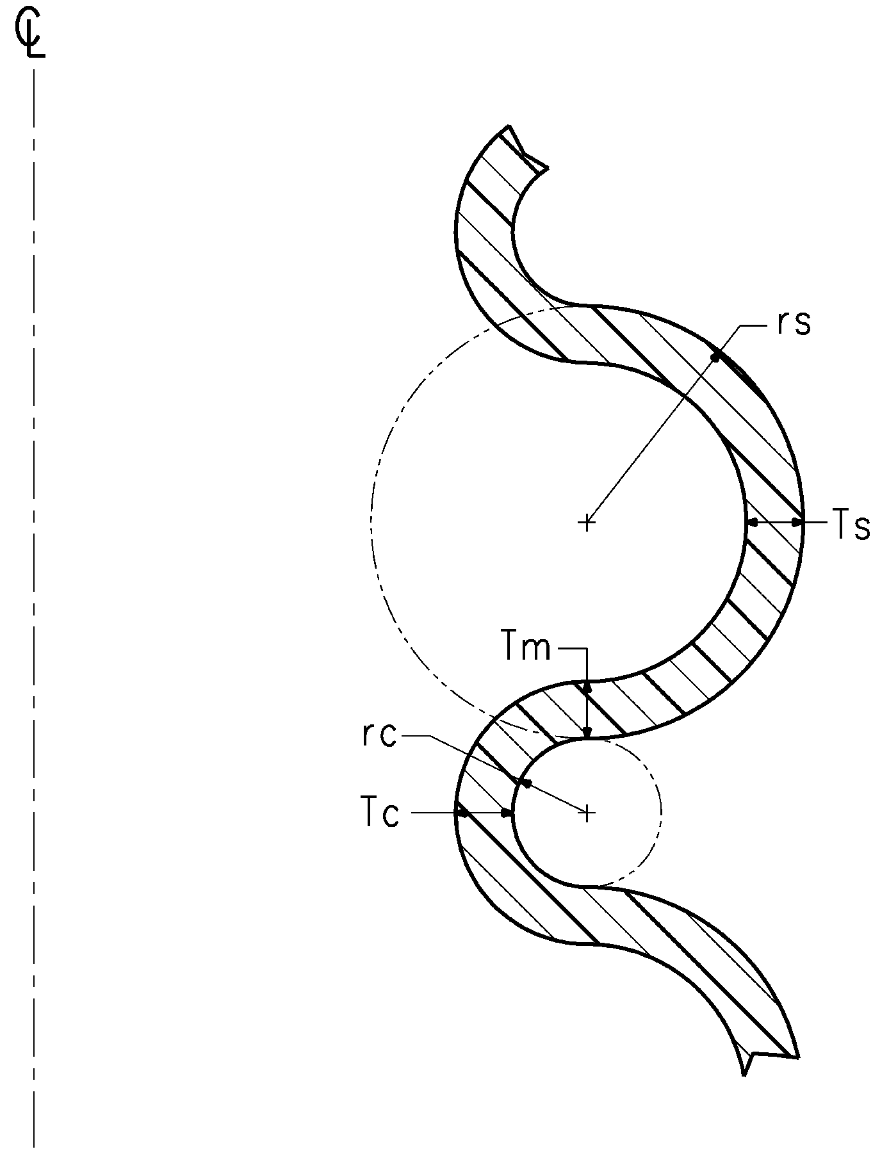


FIG. 2A

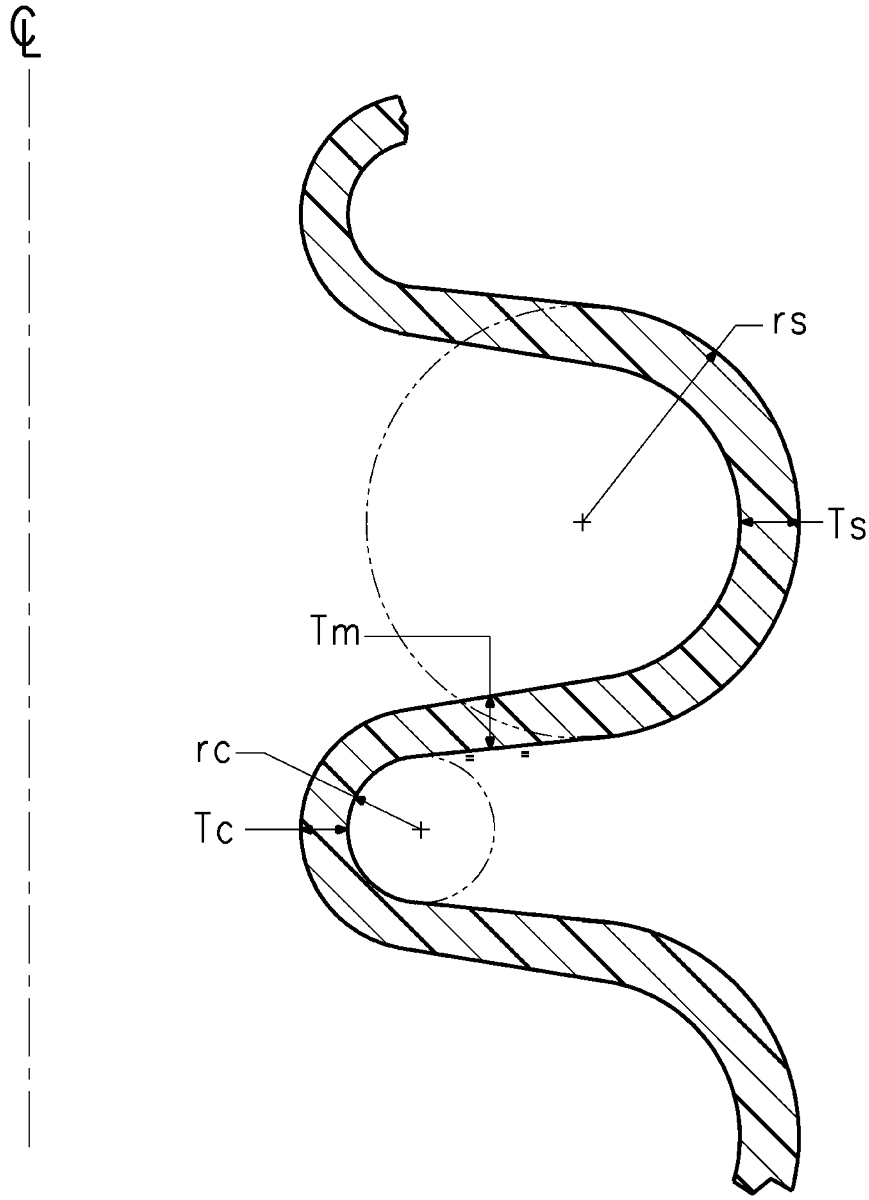


FIG. 2B

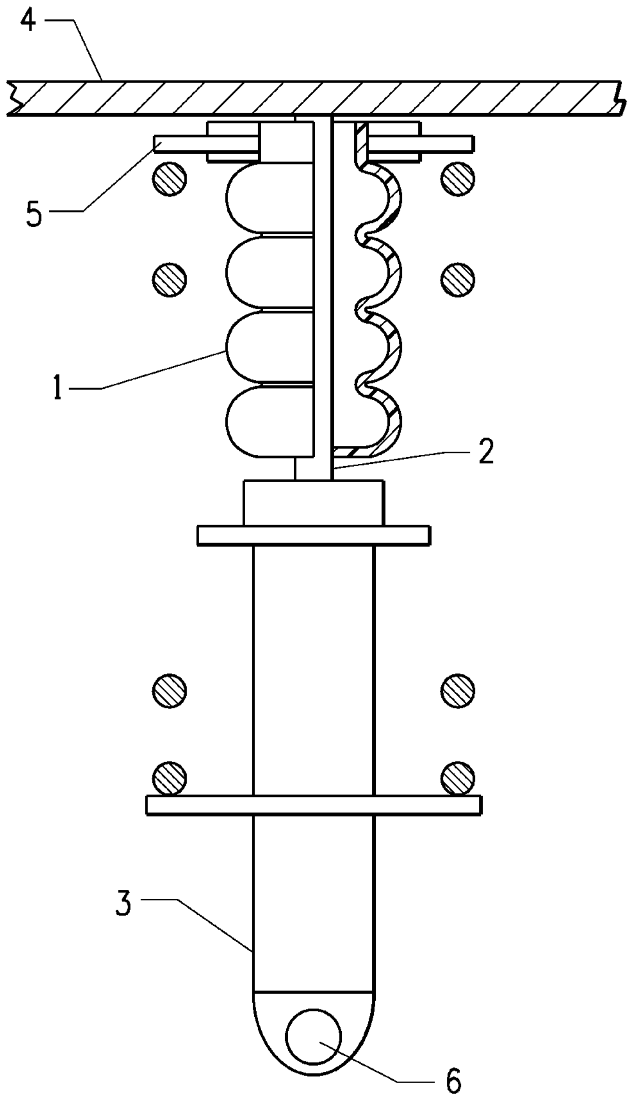


FIG. 3

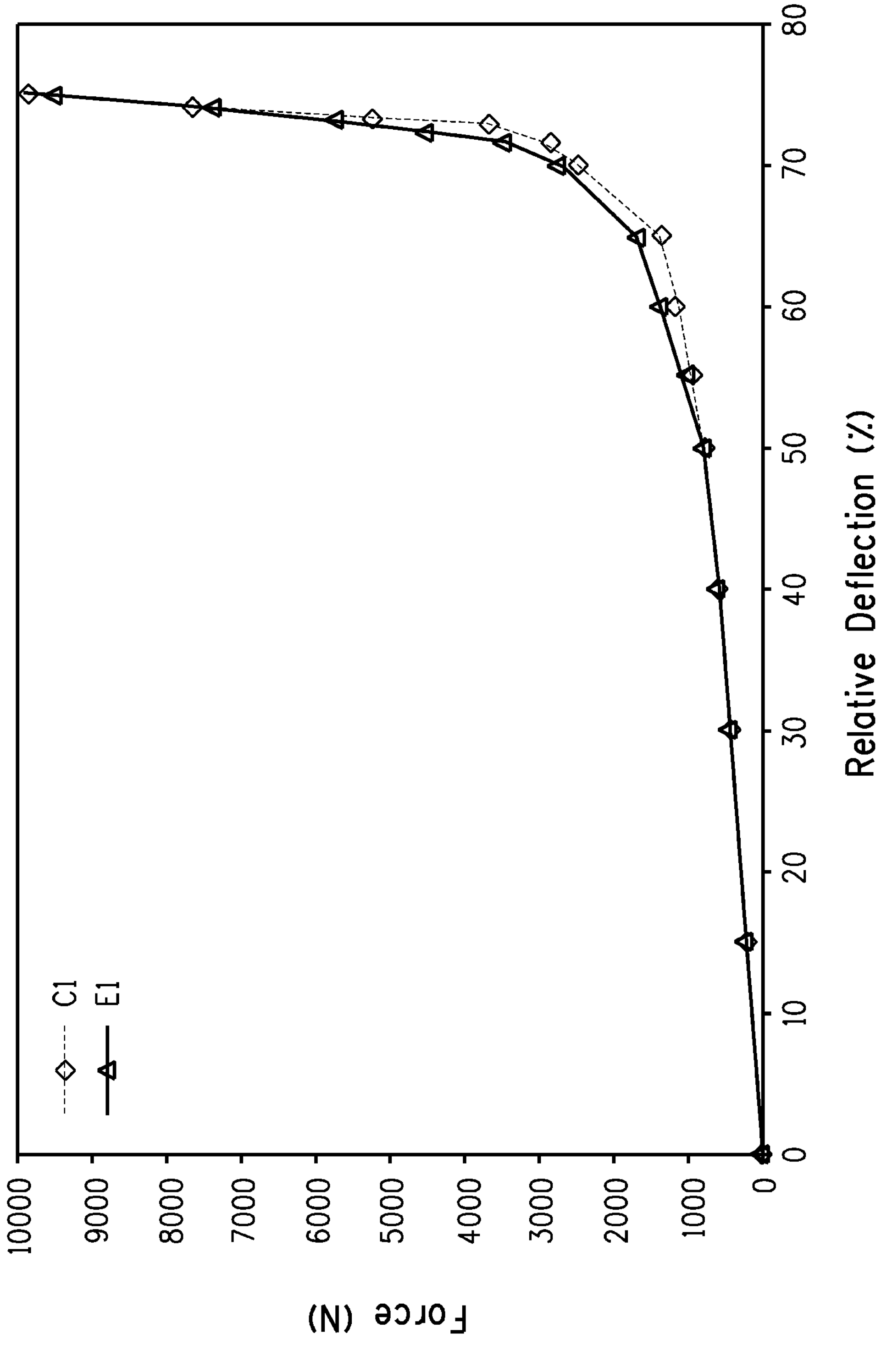
C1
E1
Force (N)
10000
9000
8000
7000
6000
5000
4000
3000
2000
1000
0
Relative Deflection (%)
0
10
20
30
40
50
60
70
80

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4681304 A
- US 5192057 A
- US 20080272529 A
- WO 2004029155 A